# EUROPEAN PATENT APPLICATION

(11) **EP 4 495 184 A1**
(43) Date of publication of application: **22.01.2025**
(21) Application number: 23770070.3
(22) Date of filing: 11.01.2023
(51) Int. Cl.: C08L 65/00, C08G 61/08, C08K 3/06

(54) **RUBBER COMPOSITION**

(30) Priority: 18.03.2022 JP 2022044689
(71) Applicant: BRIDGESTONE CORPORATION, Chuo-ku Tokyo 104-8340 (JP)
(72) Inventor: KAWADA Midori, Tokyo 104-8340 (JP); TARDIF Olivier, Tokyo 104-8340 (JP); HAMATANI Satoshi, Tokyo 104-8340 (JP)
(74) Representative: Marks & Clerk LLP
(86) International application number: PCT/JP2023/000491
(87) International publication number: WO 2023/176106

(57) **Abstract**

The problem of the present disclosure is to provide a rubber composition with improved tensile strength at break (TB) and elongation at break (EB), and the solution is a rubber composition including a rubber component (A) and a crosslinking agent (B), wherein the rubber component (A) contains a polymer (A1) having at least two hydroxyl groups and a diene unit, at least two hydroxyl groups in the polymer (A1) are bonded to adjacent carbon atoms, and a content of the crosslinking agent (B) is 0.1 to 8 parts by mass per 100 parts by mass of the rubber component (A) and 0.1 to 80 parts by mass per 100 parts by mass of the polymer (A1).

## Description

### TECHNICAL FIELD

The present disclosure relates to a rubber composition.

### BACKGROUND

Conventionally, rubber products such as tires are produced by crosslinking (vulcanizing) rubber components (polymers) with sulfur to ensure sufficient physical properties such as tensile strength at break (TB) and elongation at break (EB) as indices of durability.

Meanwhile, in view of environmental issues and conservation of resources, technologies to recycle used vulcanized rubber products have been studied. For example, PTL 1 mentioned below discloses an elastomer containing vicinal diol units with a certain structure and but-1-ene-1,4-diyl units with a certain structure and teaches that the elastomer has excellent toughness and recyclability.

### CITATION LIST

PTL 1: JP 2020-100718 A

### SUMMARY

### (Technical Problem)

However, the present inventors have found through investigation that the elastomer disclosed in PTL 1 is crosslinked by hydrogen bonds of the diol, and the hydrogen bonds dissociate easily, and that physical properties such as tensile strength at break (TB) cannot be maintained at a sufficient level.

Therefore, an object of the present disclosure is to solve the problem of the above-mentioned conventional art and to provide a rubber composition having improved tensile strength at break (TB) and elongation at break (EB).

### (Solution to Problem)

The main features of the rubber composition of the present disclosure for resolving the above problem are as follows.
[1] A rubber composition comprising a rubber component (A) and a crosslinking agent (B),
   wherein the rubber component (A) contains a polymer (A1) having at least two hydroxyl groups and a diene unit,
   at least two hydroxyl groups in the polymer (A1) are bonded to adjacent carbon atoms, and
   a content of the crosslinking agent (B) is 0.1 to 8 parts by mass per 100 parts by mass of the rubber component (A) and 0.1 to 80 parts by mass per 100 parts by mass of the polymer (A1).
[2] The rubber composition according to [1], wherein the polymer (A1) has a weight average molecular weight (Mw) of 1,000 to 1,000,000.
[3] The rubber composition according to [1] or [2], wherein the polymer (A1) comprises a monomer unit derived from a cycloocta-1,5-diene compound represented by the following general formula (1): 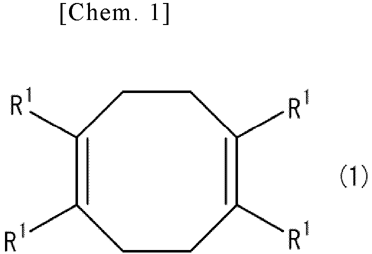 where R¹s are independently a hydrogen atom, a halogen atom, or an alkyl group having 1 to 5 carbon atoms.
[4] The rubber composition according to any one of [1] to [3], wherein the polymer (A1) comprises a monomer unit derived from a 5-cyclooctene-1,2-diol compound represented by the following general formula (2): 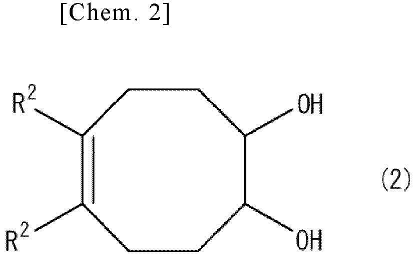 where R²s are independently a hydrogen atom, a halogen atom, or an alkyl group having 1 to 5 carbon atoms.
[5] The rubber composition according to [4], wherein a content of the monomer unit derived from the 5-cyclooctene-1,2-diol compound represented by the above general formula (2) is 5 to 50 mol% in the polymer (A1).
[6] The rubber composition according to any one of [1] to [5], wherein the crosslinking agent (B) comprises at least sulfur.

### (Advantageous Effect)

According to the present disclosure, a rubber composition having improved tensile strength at break (TB) and elongation at break (EB) can be provided.

### DETAILED DESCRIPTION

A rubber composition according to the present disclosure will be described in detail below, by way of an embodiment.

### <Rubber Composition>

A rubber composition of the present disclosure includes a rubber component (A) and a crosslinking agent (B). In the rubber composition of the present disclosure, the rubber component (A) contains a polymer (A1) having at least two hydroxyl groups and a diene unit, wherein at least two hydroxyl groups in the polymer (A1) are bonded to adjacent carbon atoms, and a content of the crosslinking agent (B) is 0.1 to 8 parts by mass per 100 parts by mass of the rubber component (A) and 0.1 to 80 parts by mass per 100 parts by mass of the polymer (A1).

In the rubber composition of the present disclosure, the polymer (A1) having hydroxyl groups forms hydrogen bonds via hydroxyl groups. Here, at least two hydroxyl groups in the polymer (A1) are bonded to adjacent carbon atoms, in other words, at least two hydroxyl groups are present in close proximity. Therefore, the hydroxyl groups of one polymer (A1) and the hydroxyl groups of the other polymer (A1) can be strongly hydrogen-bonded by forming multiple hydrogen bonds in close proximity.

In addition, since the rubber composition of the present disclosure contains the crosslinking agent (B), the rubber composition after crosslinking will have crosslinks due to hydrogen bonds and crosslinked structures due to the crosslinking agent (B). Here, when the content of the crosslinking agent (B) is 0.1 parts by mass or more per 100 parts by mass of the rubber component (A) and 0.1 parts by mass or more per 100 parts by mass of the polymer (A1), the crosslinked structures due to the crosslinking agent (B) are sufficiently formed. In addition, when the content of the crosslinking agent (B) is 8 parts by mass or less per 100 parts by mass of the rubber component (A) and 80 parts by mass or less per 100 parts by mass of the polymer (A1), adequate elongation is achieved.

In the rubber composition of the present disclosure, the rubber component (A) containing the polymer (A1) can be crosslinked with high strength due to the synergistic effect of crosslinking due to hydrogen bonds of the polymer (A1) having hydroxyl groups and the crosslinked structures due to the crosslinking agent (B). As a result, the tensile strength at break (TB) can be significantly improved compared to elastomers crosslinked solely by hydrogen bonds as described in PTL 1, and both the tensile strength at break (TB) and elongation at break (EB) can be significantly improved compared to conventional rubber compositions crosslinked only by sulfur.

In addition, in the rubber composition of the present disclosure, the hydrogen bonds can be easily dissociated. Furthermore, since the content of the crosslinking agent (B) is 8 parts by mass or less per 100 parts by mass of the rubber component (A) and 80 parts by mass or less per 100 parts by mass of the polymer (A1), there is no excessive crosslinked structures due to the crosslinking agent (B). Therefore, the rubber composition of the present disclosure is easier to recycle than rubber compositions crosslinked only with sulfur crosslinking.

### --Rubber Component (A)--

The rubber composition of the present disclosure contains a rubber component (A), and the rubber component (A) provides rubber elasticity to the composition. The rubber component (A) contains a polymer (A1) having at least two hydroxyl groups and a diene unit (in this specification, referred to simply as "polymer (A1)" or "polymer (A1) having hydroxyl groups"), and at least two hydroxyl groups in the polymer (A1) are bonded to adjacent carbon atoms.

At least two hydroxyl groups in the polymer (A1) are bonded to adjacent carbon atoms. The structure where at least two hydroxyl groups are bonded to adjacent carbon atoms allows the hydroxyl groups of one polymer (A) to form multiple hydrogen bonds with the hydroxyl groups of the other polymer (A) in close proximity, which improves the strength of the crosslinked structures due to hydrogen bonds via hydroxyl groups.

Note that the polymer (A1) having hydroxyl groups includes a site where multiple carbon atoms are directly bonded, and oxygen atoms in at least two of the hydroxyl groups are bonded to carbon atoms (carbon atoms at the site where multiple carbon atoms are directly bonded). Additionally, it can be said that the number of carbon atoms between the oxygen atom in the one hydroxyl group and the oxygen atom in the other hydroxyl group is two, or that vicinal hydroxyl groups are included.

In the polymer (A1), the hydroxyl groups are bonded in an amount of preferably 10 to 100 mol%, more preferably 20 to 60 mol% with respect to the monomer units in the polymer (A1). When the hydroxyl groups are bonded in an amount of 10 mol% or more with respect to the monomer units in the polymer (A1), the strength of the crosslinked structures through hydrogen bonding by hydroxyl groups is improved and the tensile strength at break (TB) and elongation at break (EB) of the rubber composition are further improved. Furthermore, when hydroxyl groups are bonded with respect to the monomer units in the polymer (A1) in an amount of 100 mol% or less, a polymer with sufficient elastomeric properties becomes more likely to be obtained.

It is preferable that two hydroxyl groups are present in one monomer unit, and in one embodiment, "hydroxyl groups being bonded in an amount of 10 to 100 mol% with respect to the monomer units in the polymer (A1)" means that two hydroxyl groups are present in 5 to 50 mol% of the monomer units in the total monomer units.

The diene unit in the polymer (A1) having hydroxyl groups may be a diene unit that is conjugated (conjugated diene unit) or a diene unit that is not conjugated (unconjugated diene unit).

The conjugated diene unit is a monomer unit derived from a conjugated diene compound. The conjugated diene compound as a monomer preferably has 4 to 8 carbon atoms. Examples of such a conjugated diene compound include 1,3-butadiene, isoprene, 1,3-pentadiene, and 2,3-dimethyl-1,3-butadiene. The conjugated diene compound as a monomer preferably includes 1,3-butadiene and/or isoprene in view of good elastomeric properties.

The non-conjugated diene unit is a monomer unit derived from a non-conjugated diene compound. Examples of the non-conjugated diene compound as a monomer include cycloocta-1,5-diene compounds represented by the following general formula (1): 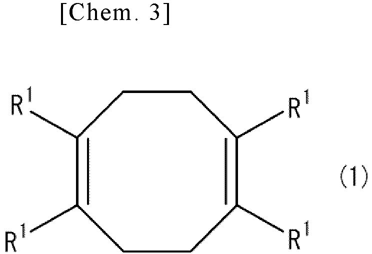 where R¹s are independently a hydrogen atom, a halogen atom, or an alkyl group having 1 to 5 carbon atoms. Here, examples of the halogen atom include fluorine, chlorine, and bromine atoms. Examples of the alkyl group having 1 to 5 carbon atoms include methyl, ethyl, n-propyl, isopropyl, n-butyl, isobutyl, sec-butyl, tert-butyl, n-pentyl, isopentyl, and neopentyl groups.

As cycloocta-1,5-diene compounds of the general formula (1), commercially available compounds may be used, or compounds synthesized according to known methods may be used. In view of ease of availability, compounds in which R¹s are a hydrogen atom, a halogen atom, methyl group, or ethyl group are preferred, compounds in which R¹s are a hydrogen atom or methyl group are more preferred, and a compound in which R¹s are a hydrogen atom is particularly preferred. Specifically, examples of cycloocta-1,5-diene compounds of formula (1) include cycloocta-1,5-diene, 1-chlorocycloocta-1,5-diene, 1,5-dichlorocycloocta-1,5-diene, 1-methylcycloocta-1,5-diene, and 1,5-dimethylcycloocta-1,5-diene.

It is preferred that the polymer (A1) having hydroxyl groups contains a monomer unit derived from a cycloocta-1,5-diene compound represented by the above general formula (1). In this case, excellent rubber elasticity can be imparted to the rubber composition.

The ratio of the diene unit in the polymer (A1) is not particularly limited, and 50 mol% or more is preferred, 70 mol% or more is more preferred, and 95 mol% or less is preferred, 90 mol% or less is more preferred.

The polymer (A1) may include units derived from other monomers that are copolymerizable with the diene compound (which can be either a conjugated diene compound or a non-conjugated diene compound). Examples of such units derived from other monomers include an olefin unit and an aromatic vinyl unit. The ratio of units derived from other monomers in the polymer (A1) is not particularly limited and may be 0 mol%. However, in one embodiment, 1 mol% or more is preferred and 50 mol% or less is preferred.

The olefin unit refers to a monomer unit derived from an olefin compound. The olefin compound as a monomer preferably has 2 to 10 carbon atoms. Specific examples of such an olefin compound include α-olefins such as ethylene, propylene, 1-pentene, 1-hexene, 1-heptene, and 1-octene, as well as heteroatom-substituted alkene compounds such as vinyl pivalate, 1-phenylthioethene, and N-vinylpyrrolidone.

The olefin compound may also have two or more hydroxyl groups. Examples of olefin compounds having two or more hydroxyl groups are 5-cyclooctene-1,2-diol compounds represented by the following general formula (2): 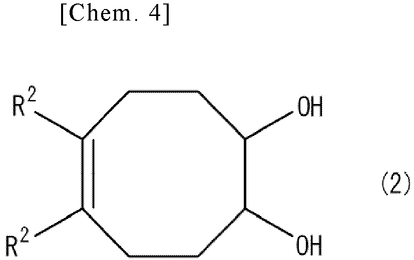 where R²s are independently a hydrogen atom, a halogen atom, or an alkyl group having 1 to 5 carbon atoms. Here, examples of the halogen atom include fluorine, chlorine, and bromine atoms. Examples of the alkyl group having 1 to 5 carbon atoms include methyl, ethyl, n-propyl, isopropyl, n-butyl, isobutyl, sec-butyl, tert-butyl, n-pentyl, isopentyl, and neopentyl groups.

As 5-cyclooctene-1,2-diol compounds of the general formula (2), commercially available compounds may be used, or compounds synthesized according to known methods may be used. In view of ease of availability, compounds in which R²s are a hydrogen atom, a halogen atom, methyl group, or ethyl group are preferred, compounds in which R²s are a hydrogen atom or methyl group are more preferred, and a compound in which R²s are a hydrogen atom is particularly preferred. Specifically, examples of 5-cyclooctene-1,2-diol compounds of the general formula (2) include 5-cyclooctene-1,2-diol and the like.

It is preferred that the polymer (A1) having hydroxyl groups contains a monomer unit derived from a 5-cyclooctene-1,2-diol compound represented by the above general formula (2). In the polymer containing a monomer unit derived from a 5-cyclooctene-1,2-diol compound represented by the general formula (2), at least two hydroxyl groups are present in close proximity. Therefore, the hydroxyl groups of one polymer and the hydroxyl groups of the other polymer form multiple hydrogen bonds in close proximity and can be strongly hydrogen-bonded. By blending such a polymer into the rubber composition, the tensile strength at break (TB) and elongation at break (EB) of the rubber composition can be further improved.

The ratio of the olefin unit in the polymer (A1) is not particularly limited and may be 0 mol%, but in one embodiment, 5 mol% or more is preferred, 10 mol% or more is more preferred, and 50 mol% or less is preferred, 30 mol% or less is more preferred.

The aromatic vinyl unit is a monomer unit derived from an aromatic vinyl compound. The aromatic vinyl compound refers to an aromatic compound substituted at least by a vinyl group. The aromatic vinyl compound as a monomer preferably has 8 to 10 carbon atoms. Specifically, examples of such an aromatic vinyl compound include styrene, α-methylstyrene, 2-methylstyrene, 3-methylstyrene, 4-methylstyrene, 2,4-dimethylstyrene, 2-ethylstyrene, 3-ethylstyrene, and 4-ethylstyrene.

The ratio of aromatic vinyl units in the polymer (A1) is not particularly limited and may be 0 mol%. However, in one embodiment, 1 mol% or more is preferred and 50 mol% or less is preferred.

### --First Manufacturing Method of Polymer (A1) Having Hydroxyl Groups--

The polymer (A1) having hydroxyl groups may be formed, for example, by ring-opening metathesis polymerization of a cycloocta-1,5-diene compound represented by the general formula (1) described above and a 5-cyclooctene-1,2-diol compound represented by the general formula (2) described above. As an example, the reaction scheme of ring-opening metathesis polymerization when cycloocta-1,5-diene is used as a compound represented by the general formula (1) and 5-cyclooctene-1,2-diol is used as a compound represented by the general formula (2) is described below.

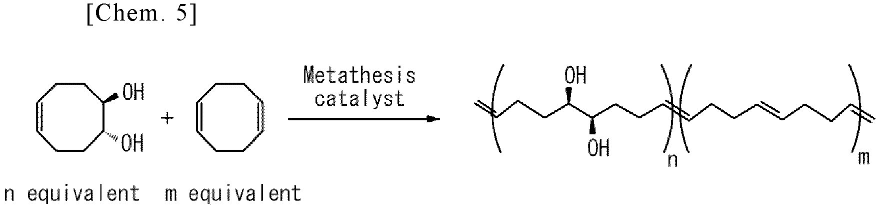

The molar ratio of the cycloocta-1,5-diene compound represented by the general formula (1) to the 5-cyclooctene-1,2-diol compound represented by the general formula (2) [compound of the general formula (1) : compound of the general formula (2)] is preferably in the range of 95:5 to 50:50 and more preferably in the range of 90: 10 to 70:30, and can be selected according to the purpose.

Here, in the polymer (A1) having hydroxyl groups, the content of the monomer unit derived from the 5-cyclooctene-1,2-diol compound represented by the above general formula (2) is preferably 5 to 50 mol%. When the content of the monomer unit derived from the compound represented by the general formula (2) is 5 mol% or more, the amount of hydroxyl groups possessed by the polymer (A1) increases, more hydrogen bonds are formed, crosslinking by hydrogen bonds can be formed more strongly, and the tensile strength at break (TB) and elongation at break (EB) of the rubber composition are further improved. When the content of the monomer unit derived from the compound represented by the general formula (2) is 50 mol% or less, the elongation properties of the polymer (A1) are improved and the elongation at break (EB) of the rubber composition is further enhanced. It is further preferred that the content of the monomer unit derived from the compound represented by the above general formula (2) in the polymer (A1) having hydroxyl groups is 10 mol% or more from the viewpoint of tensile strength at break (TB) and elongation at break (EB) of the rubber composition. It is also further preferred that the content is 30 mol% or less from the viewpoint of elongation properties of the polymer (A1) and the elongation at break (EB) of the rubber composition.

In the above-described ring-opening metathesis polymerization, known catalysts can be used, for example, transition metal complexes such as titanium complexes, zirconium complexes, molybdenum complexes, ruthenium complexes, tantalum complexes, tungsten complexes, and rhenium complexes can be used. Of these, transition metal-carbene complexes, such as Grubbs 1st generation catalyst, Grubbs 2nd generation catalyst, and Hoveyda-Grubbs catalyst are preferred. Grubbs 2nd generation catalyst is represented by the following structural formula: 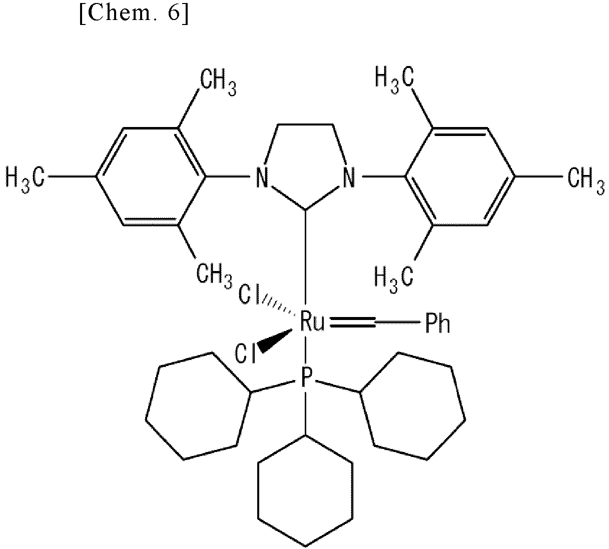 and a commercially available product can be used. The amount of the catalyst used is, for example, preferably 0.001 to 10 mol%, more preferably 0.01 to 1 mol%, and particularly preferably 0.01 to 0.1 mol% per 1 mol of monomers of the raw material.

In the above-mentioned ring-opening metathesis polymerization, a reaction temperature of -50°C to 180°C is preferred, -20°C to 100°C is more preferred, and -10°C to 80°C is even more preferred. The reaction time is preferably 1 to 24 hours, and the reaction pressure may be pressurized, depressurized, or atmospheric pressure, but atmospheric pressure is preferred. The reaction atmosphere is preferably an inert gas atmosphere such as nitrogen or argon.

The above-mentioned ring-opening metathesis polymerization may be carried out in a solvent. For example, inert solvents for the reaction are preferred as the solvent, such as aliphatic halogenated solvents, e.g., dichloromethane, chloroform, and 1,2-dichloroethane; ether-based solvents, e.g., diethyl ether, tetrahydrofuran, and dioxane; aromatic hydrocarbon solvents, e.g., benzene, toluene, xylene, and mesitylene; aromatic halogenated solvents, e.g., monochlorobenzene and dichlorobenzene; and aliphatic hydrocarbon solvents, e.g., hexane, heptane, octane, and cyclohexane.

### --Second Manufacturing Method of Polymer (A1) Having Hydroxyl Groups--

The polymer (A1) having hydroxyl groups may also be formed by reacting the polymer chain with a compound having a hydroxyl group. Here, the polymer chain can be synthesized by polymerization or copolymerization of the diene compound or copolymerization of the diene compound and other monomers that can copolymerize with the diene compound.

Furthermore, the compound having a hydroxyl group preferably has a functional group containing a sulfur atom, an unsaturated bond, or the like. Compounds having a hydroxyl group and a functional group containing a sulfur atom can be easily added to the polymer chain. In addition, compounds having a hydroxyl group and an unsaturated bond can also be easily added to the polymer chain.

Examples of functional groups containing a sulfur atom include thiol groups (also referred to as "mercapto groups"), sulfide groups (also referred to as "thioether groups"), and thiol groups are preferred. When the compound having a hydroxyl group has a thiol group as a functional group containing a sulfur atom, it is further easily added to the polymer chain.

Examples of the unsaturated bond mentioned above include a carbon-carbon double bond (C=C), a carbon-oxygen double bond (C=O), and a carbon-carbon triple bond (C≡C). Note that the carbon-carbon double bond may be part of an aromatic ring.

It is preferred that the compound with hydroxyl groups has two or more hydroxyl groups. In the compound having two or more hydroxyl groups, at least two hydroxyl groups in the compound are preferably bonded to adjacent carbon atoms. In other words, the compound having two or more hydroxyl groups is preferably a vicinal diol having a functional group containing a sulfur atom or a vicinal diol having an unsaturated bond.

Examples of the compound having two or more hydroxyl groups include sulfur-containing compounds such as 1-mercapto-1,2-ethanediol, 3-mercapto-1,2-propanediol (also referred to as "thioglycerol" or "α-thioglycerol"), 2-mercapto-1,2-propanediol, 1-mercapto-1,2-propanediol, 3-mercapto-2-methyl-1,2-propanediol, 3-mercapto-2-ethyl-1,2-propanediol, 1-mercapto-2-methyl-1,2-propanediol, and 1-mercapto-2-ethyl-1,2-propanediol, and unsaturated compounds (aromatic compounds) such as catechol, methylcatechol, ethylcatechol, pyrogallol, and gallic acid. Of these, thioglycerol is preferable.

### --Other Manufacturing Method of Polymer (A1) Having Hydroxyl Groups--

The manufacturing method of the polymer (A1) having hydroxyl groups is not limited to the first or second manufacturing method described above and may be formed by other manufacturing methods. For example, a polymer in which two hydroxyl groups are bonded to adjacent carbon atoms can be manufactured by synthesizing a polymer chain having epoxy groups and ring-opening (hydrolyzing) the epoxy groups.

The polymer (A1) having hydroxyl groups has a weight average molecular weight (Mw) of preferably 300 to 1,000,000, and more preferably 1,000 to 1,000,000. When the weight average molecular weight (Mw) is 1,000 or more, the tensile strength at break (TB) and elongation at break (EB) of the rubber composition are improved, and when the weight average molecular weight (Mw) is 1,000,000 or less, the processability of the rubber composition is improved.

In this specification, the weight average molecular weight (Mw) of the polymer (A1) is determined by gel permeation chromatography (GPC) using polystyrene as a standard substance.

The rubber composition of the present disclosure includes the above-mentioned polymer (A1) having hydroxyl groups as the rubber component (A), and may further include a rubber component other than the polymer (A1) having hydroxyl groups. Examples of such other rubber components include natural rubber (NR), synthetic diene rubber, and non-diene rubber. Examples of the synthetic diene rubber include synthetic isoprene rubber (IR), styrene-butadiene rubber (SBR), butadiene rubber (BR), styreneisoprene rubber (SIR), chloroprene rubber (CR), ethylene-butadiene copolymer, and ethylene-styrene-butadiene copolymer. Examples of the non-diene rubber include silicone rubber, fluoro rubber, and urethane rubber.

In the rubber component (A) of the rubber composition, the ratio of the above-described polymer (A1) having hydroxyl groups is preferably 10 mass% or more, more preferably 50 mass% or more, and the ratio of the above-described polymer (A1) having hydroxyl groups may be 100 mass%.

### --Crosslinking Agent (B)--

The rubber composition of the present disclosure contains a crosslinking agent (B). When the rubber composition contains the crosslinking agent (B) together with the above-described polymer (A1) having hydroxyl groups, crosslinking due to hydrogen bonds and crosslinked structures due to the crosslinking agent (B) will be present in the rubber composition after crosslinking.

The content of the crosslinking agent (B) is 0.1 to 8 parts by mass per 100 parts by mass of the rubber component (A), and 0.1 to 80 parts by mass per 100 parts by mass of the polymer (A1) having hydroxyl groups.

When the content of the crosslinking agent (B) is 0.1 parts by mass or more per 100 parts by mass of the rubber component (A), the crosslinked structures due to the crosslinking agent (B) are sufficiently formed and the tensile strength at break (TB) and elongation at break (EB) of the rubber composition are improved. When the content of the crosslinking agent (B) is 8 parts by mass or less per 100 parts by mass of the rubber component (A), moderate elongation can be achieved and the elongation at break (EB) of the rubber composition is improved. The content of the crosslinking agent (B) is preferably 0.5 parts by mass or more per 100 parts by mass of the rubber component (A) from the viewpoint of tensile strength at break (TB) and elongation at break (EB) of the rubber composition, and is preferably 5 parts by mass or less per 100 parts by mass of the rubber component (A) from the viewpoint of elongation properties and elongation at break (EB) of the rubber composition.

Furthermore, when the content of the crosslinking agent (B) is 0.1 parts by mass or more per 100 parts by mass of the polymer (A1) having hydroxyl groups, the crosslinked structures due to the crosslinking agent (B) are sufficiently formed and the tensile strength at break (TB) and elongation at break (EB) of the rubber composition are improved. When the content of the crosslinking agent (B) is 80 parts by mass or less per 100 parts by mass of the polymer (A1) having hydroxyl groups, moderate elongation can be achieved and the elongation at break (EB) of the rubber composition is improved. The content of the crosslinking agent (B) is preferably 0.5 parts by mass or more per 100 parts by mass of the polymer (A1) having hydroxyl groups from the viewpoint of tensile strength at break (TB) and elongation at break (EB) of the rubber composition, and is preferably 50 parts by mass or less per 100 parts by mass of the polymer (A1) having hydroxyl groups from the viewpoint of elongation properties and elongation at break (EB) of the rubber composition.

Examples of the crosslinking agents (B) include sulfur, peroxides, etc. Examples of the peroxide include organic peroxides, and specific examples thereof include tert-butyl hydroperoxide, 1,1,3,3-tetramethylbutyl hydroperoxide, cumene hydroperoxide, p-menthane hydroperoxide, diisopropyl benzene hydroperoxide, dicumyl peroxide, di-tert-butyl peroxide, di-tert-hexyl peroxide, diisopropyl benzene hydroperoxide, tert-butyl cumyl peroxide, di(2-tert-butylperoxyisopropyl) benzene, 2,5-dimethyl-2,5-di(tert-butylperoxy) hexane, peroxybenzoic acid, benzoyl peroxide, 1,1-bis(1,1-dimethylethylperoxy) cyclohexane, 1,1-bis(tert-butylperoxy) cyclohexane, 1,1-bis(tert-butylperoxy)-3,3,5-trimethylcyclohexane, 1,1-bis(tert-hexylperoxy)-3,3,5-trimethylcyclohexane, 1,1-bis(tert-hexylperoxy) cyclohexane, 2,2-bis(4,4-di-(tert-butylperoxy)cyclohexyl) propane, n-butyl-4,4-di-(tert-butylperoxy) valerate, tert-butylperoxy laurate, tert-butylperoxy-2-ethylhexanoate, 1,1,3,3-tetramethylbutylperoxy-2-ethylhexanoate, tert-hexylperoxy-2-ethylhexanoate, tert-butylperoxy-2-ethylhexanoate, tert-butyl peroxyacetate, cyclohexanone peroxide, acetylacetone peroxide, diisopropyl peroxydicarbonate, and di(4-tert-butylcyclohexyl) peroxydicarbonate. Here, when sulfur is used as the crosslinking agent (B), sulfur crosslinking is formed, and when a peroxide is used as the crosslinking agent (B), crosslinked structures resulting from the peroxide (such as C-C bonds) are formed.

The crosslinking agent (B) preferably contains at least sulfur. It is further preferred that sulfur is included in an amount of 50 mass% or more of the crosslinking agent (B), and all of the crosslinking agent (B) may be sulfur. When the crosslinking agent (B) contains at least sulfur, sulfur crosslinking is formed as crosslinked structures due to the crosslinking agent (B), and the tensile strength at break (TB) and elongation at break (EB) of the rubber composition are further improved.

### --Metal Ion of Element in Groups 3 to 12 in Periodic Table--

The rubber composition may further contain a metal ion of an element in Groups 3 to 12 in the periodic table. When such a metal ion is included, hydroxyl groups in the polymer (A1) complex with the metal ion of the element of Groups 3 to 12 in the periodic table. Accordingly, the polymer (A1) can be crosslinked with higher strength than hydrogen bonds, thereby further improving the tensile strength at break (TB) and elongation at break (EB) of the rubber composition.

Examples of elements in Group 3 in the periodic table include scandium and yttrium.

Furthermore, examples of elements in Group 4 in the periodic table include titanium and zirconium.

Furthermore, examples of elements in Group 5 in the periodic table include vanadium and niobium.

Furthermore, examples of elements in Group 6 in the periodic table include chromium, molybdenum, and tungsten.

Specifically, examples of elements in Group 7 in the periodic table include manganese and rhenium.

Furthermore, examples of elements in Group 8 in the periodic table include iron, ruthenium, and osmium.

Furthermore, examples of elements in Group 9 in the periodic table include cobalt, rhodium, and iridium.

Furthermore, examples of elements in Group 10 in the periodic table include nickel, palladium, and platinum.

Furthermore, examples of elements in Group 11 in the periodic table include copper and silver.

Furthermore, examples of elements in Group 12 in the periodic table include zinc.

Metal ions of elements of Groups 3 to 12 in the periodic table tend to bond strongly with the hydroxyl groups.

Note that the valence of the ion of metal ion of an element of Groups 3 to 12 in the periodic table is not particularly limited and may be any valence that each element can take.

The metal ion is preferably selected from metal ions of elements of Groups 7 to 12 in the periodic table. When the metal ion is a metal ion of an element in Groups 7 to 12 in the periodic table, the bond with the hydroxyl groups tend to be even more stronger and crosslinking with higher strength can be formed.

The metal ion is preferably selected from metal ions of elements in the fourth and fifth periods in the periodic table. Metal ions of elements in the fourth and fifth periods in the periodic table have high coordination strength to the hydroxyl groups, which improves the bond dissociation energy between the metal ion and the hydroxyl groups and further improves the tensile strength at break (TB) and elongation at break (EB) of the rubber composition.

It is particularly preferred that the metal ion is at least one selected from the group consisting of iron, copper, and zinc ions. Iron, copper, and zinc ions tend to bond particularly strongly with hydroxyl groups and can form even stronger crosslinked structures. Note that the valence of the iron ion is preferably divalent (Fe²⁺) or trivalent (Fe³⁺).

The metal ion is preferably complexed with hydroxyl groups of the polymer (A1) by adding a metal salt to the rubber composition. Note that the form of the metal salt to be added is not particularly limited and may be, for example, a hydrate. The amount of the metal salt to be added is preferably in the range of 1 to 30 parts by mass, more preferably in the range of 1 to 15 parts by mass, even more preferably in the range of 1 to 10 parts by mass, and particularly preferably in the range of 1 to 5 parts by mass, per 100 parts by mass of the polymer (A1) having hydroxyl groups.

Examples of the metal salt mentioned above include metal halides, metal sulfates, and metal nitrates. Of these, metal halides are preferred. Metal halides are easier to handle and can more easily form crosslinking with higher strength.

Additionally, examples of the metal halides mentioned above include metal fluorides, metal chlorides, metal bromides, and metal iodides. Of these, metal chlorides are preferred. Metal chlorides are easy to handle and can form crosslinking with high strength with greater ease.

It is also preferred that the metal salt is other than metal oxides, metal carbonates, and fatty acid metal salts. Metal salts other than metal oxides, metal carbonates, and fatty acid metal salts tend to form a coordinate bond more easily (further tend to complex) with the hydroxyl groups.

Specifically, examples of the metal salt include FeCl₂, FeCl₂·4H₂O, FeCl₃, FeCl₃·6H₂O, CuCl₂, CuCl₂·2H₂O, and ZnCl₂. One metal salt may be used alone or two or more of these may be used in combination.

### --Others--

In addition to the rubber component (A), the crosslinking agent (B), and the metal ion (metal salt) of an element in Groups 3 to 12 in the periodic table described above, the rubber composition of the present disclosure may also include compounding agents commonly used in the rubber industry that may be appropriately selected and blended within a range that does not impair the object of the present disclosure. Examples of these compounding agents include, for example, fillers (such as carbon black and silica), softeners, waxes, stearic acid, antioxidants, silane coupling agents, zinc flower (zinc oxide), vulcanization accelerators, and the like. Commercial products are suitable for use as these compounding agents.

Examples of the waxes include paraffin wax and microcrystalline wax. The content of the waxes is not particularly limited and is preferably in the range of 0.1 to 5 parts by mass, more preferably 1 to 4 parts by mass, per 100 parts by mass of the rubber component (A).

The content of the stearic acid is not particularly limited and is preferably in the range of 0.1 to 5 parts by mass, more preferably 0.5 to 4 parts by mass, per 100 parts by mass of the rubber component (A).

Examples of the antioxidants include N-(1,3-dimethylbutyl)-N'-phenyl-p-phenylenediamine (6PPD), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the antioxidants is not particularly limited and is preferably in the range of 0.1 to 5 parts by mass, more preferably 1 to 4 parts by mass, per 100 parts by mass of the rubber component (A).

The content of the zinc flower (zinc oxide) is not particularly limited and is preferably in the range of 0.1 to 10 parts by mass, more preferably 1 to 5 parts by mass, per 100 parts by mass of the rubber component (A).

Examples of the vulcanization accelerators include sulfenamide-based vulcanization accelerators, guanidine-based vulcanization accelerators, thiazole-based vulcanization accelerators, thiuram-based vulcanization accelerators, and dithiocarbamate-based vulcanization accelerators. The content of the vulcanization accelerators is not particularly limited and is preferably in the range of 0.1 to 5 parts by mass, more preferably in the range of 0.2 to 3 parts by mass, per 100 parts by mass of the rubber component (A).

### --Method of Manufacturing Rubber Composition--

The method of manufacturing the rubber composition is not particularly limited, but the rubber composition can be manufactured, for example, by blending the rubber component (A) and the crosslinking agent (B) mentioned above with various components selected as appropriate, and then kneading, warming, extruding, etc. Furthermore, the resulting rubber composition can be crosslinked to produce crosslinked rubber.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, that are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.

There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.

There are no particular limitations on the apparatus, method, conditions, etc., for performing the crosslinking, which may be appropriately selected depending on the purpose. Examples of the apparatus for crosslinking include molding vulcanizers and other apparatuses generally used for vulcanizing rubber compositions. The conditions for crosslinking are such that the temperature is, for example, about 100°C to 190°C.

For example, in the first stage of kneading, the rubber component (A) [including the polymer (A1) having hydroxyl groups] and various components selected as appropriate may be blended and kneaded to produce a mixture including the rubber component (A), and in the second and subsequent stages of kneading, the crosslinking agent (B) and various components selected as appropriate may be blended and kneaded to manufacture the rubber composition. Furthermore, by crosslinking the rubber composition after molding it into the desired shape, a crosslinked rubber with crosslinked structures due to hydrogen bonds and crosslinked structures due to the crosslinking agent (B) can be formed.

### --Applications--

The rubber composition of the present disclosure can be used in a wide variety of rubber products. For example, rubber products include tires, rubber crawlers, and seismic isolation rubber.

### EXAMPLES

The present disclosure will be described in more detail below with reference to examples, although the present disclosure is not limited to these examples.

### <Analyses of Polymer>

The weight average molecular weight (Mw) of the polymer is measured using the following method.

### (1) Method for Measuring Weight Average Molecular Weight (Mw)

The weight average molecular weight (Mw) of the polymer in terms of polystyrene is determined by gel permeation chromatography [GPC: HLC-8321GPC/HT manufactured by Tosoh Corporation, columns: two HT-806M columns manufactured by Showa Denko K. K., detector: differential refractometer (RI)], using monodisperse polystyrene as the standard. Note that the measurement temperature is 40°C.

### <Method for Synthesizing Polymer Having Hydroxyl Groups>

A polymer having hydroxyl groups was synthesized by carrying out ring-opening metathesis polymerization according to macromolecules 2020, 53, 4121 using cycloocta-1,5-diene and 5-cyclooctene-1,2-diol as monomers.

In the synthesized polymer having hydroxyl groups, the ratio of cycloocta-1,5-diene units is 80 mol% and the ratio of 5-cyclooctene-1,2-diol units is 20 mol%, per all constituting units of the polymer. The weight average molecular weight (Mw) is 202,000.

### <Production of Rubber Composition>

Rubber compositions were produced according to the formulations summarized in Table 1. In the kneading, first and second stages of kneading were performed in this order. The first stage of kneading was performed at 110°C for 3 minutes, and the second stage was performed at 80°C for 1 minute and 30 seconds. The tensile strength at break (TB) and elongation at break (EB) of the resulting rubber compositions were measured with the following method.

### (2) Measurement Methods of TB and EB

JIS No. 7 dumbbell-shaped test pieces were prepared from the rubber compositions, and the tensile strength at break (TB) and elongation at break (EB) were measured by conducting tensile tests at room temperature (23°C) in accordance with JIS K6251. The tensile strength at break (TB) and elongation at break (EB) were expressed as index values by taking those of Comparative Example 1 as 100. Higher index values indicate greater tensile strength at break (TB) and elongation at break (EB).

**[Table 1]**

| | | | Comp Ex. 1 | Example 1 |
|---|---|---|---|---|
| Formulation (first stage of kneading) | Polymer having hydroxyl groups *1 | parts by mass | - | 100 |
| | Butadiene rubber *2 | | 100 | - |
| | Stearic acid *3 | | 2 | 2 |
| | Wax *4 | | 2 | 2 |
| | Antioxidant 6PPD *5 | | 1 | 1 |
| Formulation (second stage of kneading) | Zinc flower *6 | parts by mass | 2.50 | 2.50 |
| | Vulcanization accelerator DPG *7 | | 1.73 | 0.87 |
| | Vulcanization accelerator CBS *8 | | 0.87 | 0.43 |
| | Vulcanization accelerator DM *9 | | 2.48 | 1.24 |
| | Sulfur *10 | | 1.95 | 0.98 |
| Physical properties | EB | Index | 100 | 591 |
| | TB | Index | 100 | 246 |

| | | | | |
|---|---|---|---|---|
| *1 Polymer having hydroxyl groups: the polymer having hydroxyl groups synthesized by the above method *2 Butadiene rubber: trade name "TUFDENE^{®} 2000R" (TUFDENE is a registered trademark in Japan, other countries, or both) manufactured by Asahi Kasei Corporation *3 Stearic acid: trade name "Lunak S-70V" manufactured by Kao Corporation *4 Wax: trade name "Suntight A" manufactured by Seiko Chemical Co., Ltd. *5 Antioxidant 6PPD: N-phenyl-N'-(1,3-dimethylbutyl)-p-phenylenediamine, trade name "NOCRAC 6C" manufactured by OUCHI SHINKO CHEMICAL INDUSTRIAL CO., LTD. *6 Zinc flower: manufactured by FUJIFILM Wako Pure Chemical Corporation *7 Vulcanization accelerator DPG: 1,3-diphenylguanidine, trade name "SOXINOL D" manufactured by Sumitomo Chemical Co., Ltd. *8 Vulcanization accelerator CBS: N-cyclohexyl-2-benzothiazolylsulfenamide, trade name "Sanceler CM-G" manufactured by Sanshin Chemical Industry Co. Ltd. *9 Vulcanization accelerator DM: di-2-benzothiazolyl disulfide, trade name "NOCCELER DM-P" manufactured by OUCHI SHINKO CHEMICAL INDUSTRIAL CO., LTD. *10 Sulfur: manufactured by FUJIFILM Wako Pure Chemical Corporation | | | | |

It can be understood from Table 1 that the rubber composition of Example 1 according to the present disclosure has significantly improved tensile strength at break (TB) and elongation at break (EB) compared to a typical rubber composition with sulfur crosslinking (Comparative Example 1).

### INDUSTRIAL APPLICABILITY

The rubber composition of the present disclosure can be used in various rubber products, such as tires, rubber crawlers, and seismic isolation rubber.

## Claims

1. A rubber composition comprising a rubber component (A) and a crosslinking agent (B),
wherein the rubber component (A) contains a polymer (A1) having at least two hydroxyl groups and a diene unit,
at least two hydroxyl groups in the polymer (A1) are bonded to adjacent carbon atoms, and
a content of the crosslinking agent (B) is 0.1 to 8 parts by mass per 100 parts by mass of the rubber component (A) and 0.1 to 80 parts by mass per 100 parts by mass of the polymer (A1).

2. The rubber composition according to claim 1, wherein the polymer (A1) has a weight average molecular weight (Mw) of 1,000 to 1,000,000.

3. The rubber composition according to claim 1 or 2, wherein the polymer (A1) comprises a monomer unit derived from a cycloocta-1,5-diene compound represented by the following general formula (1): 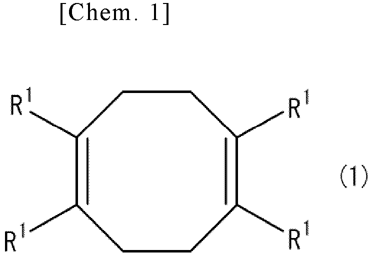 where R¹s are independently a hydrogen atom, a halogen atom, or an alkyl group having 1 to 5 carbon atoms.

4. The rubber composition according to any one of claims 1 to 3, wherein the polymer (A1) comprises a monomer unit derived from a 5-cyclooctene-1,2-diol compound represented by the following general formula (2): 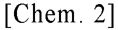 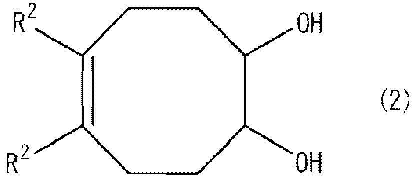 where R²s are independently a hydrogen atom, a halogen atom, or an alkyl group having 1 to 5 carbon atoms.

5. The rubber composition according to claim 4, wherein a content of the monomer unit derived from the 5-cyclooctene-1,2-diol compound represented by the above general formula (2) is 5 to 50 mol% in the polymer (A1).

6. The rubber composition according to any one of claims 1 to 5, wherein the crosslinking agent (B) comprises at least sulfur.
